# DEMANDE DE BREVET EUROPEEN

(11) **EP 4 817 820 A1**
(43) Date de publication de la demande: **07.10.2026**
(21) Numéro de dépôt: 26305432.2
(22) Date de dépôt: 01.04.2026
(51) Int. Cl.: B25J 15/06, B25J 15/00, B65G 47/91

(54) **MODULE DE PREHENSION**

(30) Priorité: 04.04.2025 FR 2503543
(71) Demandeur: Velec Systems, 59150 Wattrelos (FR)
(72) Inventeur: GHESTEM, Florian, 59800 LILLE (FR); LALET, Ludovic, 59650 VILLENEUVE D'ASCQ (FR); LAURIDANT, Martin, 59800 LILLE (FR)
(74) Mandataire: Plasseraud IP

(57) **Abrégé**

Module de préhension (10) pour un ensemble préhenseur modulaire (40), le module de préhension (10) comprenant un support (11), un ou plusieurs ergots (12) faisant saillie du support (11), chaque ergot (12) étant venu de matière avec le support (11) et adapté pour l'attache amovible d'une ventouse (14) respective, au moins un canal interne (20) formé dans le support (11) et au moins une partie desdits un ou plusieurs ergots (12), le canal interne (20) débouchant au niveau d'une ou plusieurs ouvertures amont (21) situées sur le support (11) et configurées chacune pour être en communication fluidique avec une conduite d'aspiration respective, et au niveau d'une ou plusieurs ouvertures aval (22) situées à l'extrémité d'un ergot (12) correspondant.

## Description

### Domaine technique

La présente description se rapporte à un module de préhension, notamment pour la préhension d'objet longiligne dans le domaine de l'agroalimentaire. La présente description se rapporte également à un ensemble préhenseur modulaire comprenant un tel module de préhension.

### Technique antérieure

Dans le secteur de la production industrielle, l'automatisation a révolutionné les processus de manipulation et de conditionnement des produits, en particulier dans l'industrie agroalimentaire. Les dispositifs de « picking », ou « pick and place », jouent un rôle important dans cette transformation. Ces dispositifs sont conçus pour sélectionner, trier et déplacer efficacement les marchandises, facilitant ainsi le passage des produits alimentaires d'un état de vrac à leur disposition finale dans des emballages. Grâce à leur capacité à effectuer des manipulations répétitives à grande vitesse, ces dispositifs permettent non seulement d'accroître la productivité, mais aussi de réduire la pénibilité des tâches pour les opérateurs humains. En intégrant des bras robotisés articulés et des systèmes de préhension avancés, les dispositifs de "picking" assurent une manipulation précise et rapide des produits, répondant ainsi aux exigences rigoureuses de l'industrie agroalimentaire en matière de sécurité et d'efficacité.

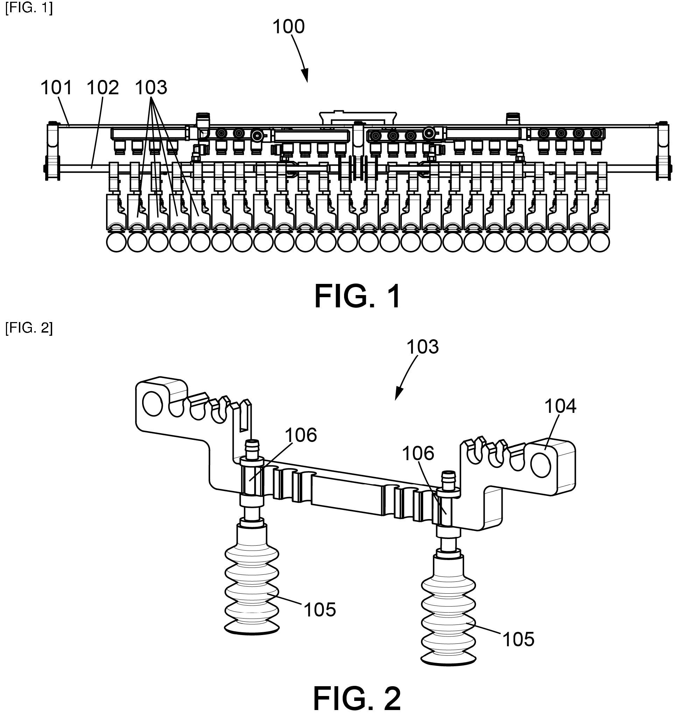

Parmi ces dispositifs, comme visible à la figure 1, il est connu un ensemble préhenseur modulaire 100 qui comprend une armature 101 comportant des rails 102 longitudinaux sur lesquels sont montés en coulissement une pluralité de modules de préhension 103, les uns à la suite des autres et parallèles entre eux. L'armature 101 principale est équipée d'au moins un actionneur, configuré pour faire coulisser la pluralité de module de préhension 103 le long des rails 102.

Selon un mode de réalisation connu et représenté à la figure 2, un module de préhension 103 comprend un support 104 monté coulissant sur des rails 102. On trouve également des ventouses 105, pour saisir et manipuler les objets. Chaque ventouse 105 est reliée à une conduite d'aspiration respective, par un connecteur pneumatique 106 respectif, qui assure à la fois une liaison mécanique et fluidique entre la ventouse 105 et la conduite d'aspiration. Ces connecteurs pneumatiques 106 sont par ailleurs structurellement indépendants du support 104 et fixés de manière solidaire au support 104, garantissant ainsi la solidarisation des ventouses 105 au support 104.

Ce module de préhension 103, bien que modulaire, se compose d'un nombre important de pièces séparées, ce qui présente plusieurs contraintes. Lors de l'assemblage et du désassemblage, la multiplicité des composants peut compliquer et allonger le processus, nécessitant une attention particulière pour garantir un montage correct et sécurisé. De plus, le nettoyage de ces pièces est une tâche essentielle, surtout dans l'industrie agroalimentaire où l'hygiène est primordiale. La présence de nombreuses pièces augmente le risque de rétention de résidus, rendant le nettoyage plus laborieux et exigeant des procédures rigoureuses pour assurer la conformité aux normes sanitaires. Ces contraintes peuvent impacter l'efficacité opérationnelle et la maintenance du module de préhension 103.

De plus, dans un ensemble préhenseur modulaire 100 comprenant un nombre important de modules de préhension 103, l'encombrement des conduites et l'intrication excessive de celles-ci peuvent s'avérer problématiques.

### Exposé

Il est proposé un module de préhension pour un ensemble préhenseur modulaire, le module de préhension comprenant :
- un support,
- un ou plusieurs ergots faisant saillie du support, chaque ergot étant venu de matière avec le support et adapté pour l'attache amovible d'une ventouse respective,
- au moins un canal interne formé dans le support et au moins une partie desdits un ou plusieurs ergots, le canal interne débouchant :
   -- au niveau d'une ou plusieurs ouvertures amont situées sur le support et configurées chacune pour être en communication fluidique avec une conduite d'aspiration respective, et
   -- au niveau d'une ou plusieurs ouvertures aval situées à l'extrémité d'un ergot correspondant.

Le canal interne peut comprendre :
- une conduite principale débouchant au niveau desdites une ou plusieurs ouvertures amont, et
- une ou plusieurs conduites secondaires en communication fluidique avec la conduite principale et débouchant chacune au niveau d'une ouverture aval respective.

Lesdits un ou plusieurs ergots peuvent être répartis selon une direction longitudinale du module de préhension, la conduite principale du canal interne comprenant au moins une branche de distribution s'étendant longitudinalement le long desdits un ou plusieurs ergots et par laquelle la conduite principale est en communication fluidique avec lesdites une ou plusieurs conduites secondaires.

Lesdites une ou plusieurs ouvertures amont peuvent comprendre une ouverture amont unique.

Le module de préhension peut comprendre un ou plusieurs organes de guidage solidaire du support, chaque organe de guidage étant configuré pour coopérer avec au moins un rail respectif afin de guider en coulissement le module de préhension sur le rails(42).

Au moins un, voire chacun, desdits un ou plusieurs organes de guidage peut comprendre une fourche de guidage qui présente une ouverture en forme de fente qui permet l'insertion ou le retrait du rail dans une extension tubulaire formée par la fourche de guidage, la fourche de guidage étant adaptée pour un maintien du rail dans l'extension tubulaire par effet de clipsage.

Selon un autre aspect, il est proposé un ensemble préhenseur modulaire comprenant une armature qui comporte un ou plusieurs rails s'étendant selon une direction axiale et un ou plusieurs modules de préhension tels que décrits ci-avant, chaque module de préhension étant monté coulissant sur lesdits un ou plusieurs rails.

Les modules de préhension peuvent être couplés deux à deux de sorte à coulisser conjointement sur lesdits un ou plusieurs rails entre une configuration de prise et une configuration de dépose.

L'ensemble préhenseur modulaire peut comprendre un ou plusieurs connecteurs qui comportent chacun une entrée en communication fluidique avec une source de vide et une pluralité de sorties. Chaque sortie de chaque connecteur peut être en communication fluidique par une conduite d'aspiration avec une ouverture amont associée parmi lesdites une ou plusieurs ouvertures amont d'un module de préhension associé parmi lesdits un ou plusieurs modules de préhension.

Chaque connecteur peut être conformé pour assurer un chemin fluidique identique entre la source de vide et chaque ouverture amont associée à l'une desdites une ou plusieurs sorties du connecteur.

### Brève description des dessins

D'autres caractéristiques, détails et avantages apparaîtront à la lecture de la description détaillée ci-après, et à l'analyse des dessins annexés, sur lesquels :
[Fig. 1] est une vue de côté d'un ensemble préhenseur modulaire selon l'état de la technique connue.
[Fig. 2] est une vue en perspective d'un module de préhension selon l'état de la technique connue.
[Fig. 3] est une vue en perspective d'un module de préhension selon une première variante de la présente description.
[Fig. 4] est une vue en coupe du module de préhension selon la première variante.
[Fig. 5] une vue en perspective d'un module de préhension selon une deuxième variante de la présente description.
[Fig. 6] est une vue de face du module de préhension selon la deuxième variante.
[Fig. 7] est une vue de dessus du module de préhension selon la deuxième variante.
[Fig. 8] est une vue en coupe du module de préhension selon la deuxième variante.
[Fig. 9] est une vue en perspective d'un module de préhension selon une troisième variante de la présente description.
[Fig. 10] est une vue en coupe du module de préhension selon la troisième variante.
[Fig. 11] est une vue en perspective d'un module de préhension selon une quatrième variante de la présente description.
[Fig. 12] est une vue en coupe du module de préhension selon la quatrième variante.
[Fig. 13] est une vue en perspective d'un ensemble préhenseur modulaire selon la présente description, dans une configuration de prise.
[Fig. 14] est une vue partielle en perspective de l'ensemble préhenseur modulaire de la figure 13.
[Fig. 15] est une vue en perspective d'un ensemble préhenseur modulaire selon la présente description, dans une configuration de dépose.
[Fig. 16] est une vue partielle en perspective de l'ensemble préhenseur modulaire de la figure 13.
[Fig. 17] est une vue partielle de dessus de l'ensemble préhenseur modulaire de la figure 13.
[Fig. 18] est une vue à plus grande échelle de la zone en pointillés de la figure 15.
[Fig. 19] est une vue en perspective d'un connecteur de l'ensemble préhenseur modulaire de la figure 13.
[Fig. 20] est une autre vue en perspective d'un connecteur de l'ensemble préhenseur modulaire de la figure 13.
[Fig. 21] est une vue en perspective d'un module de préhension selon une encore une autre variante de la présente description.

### Description des modes de réalisation

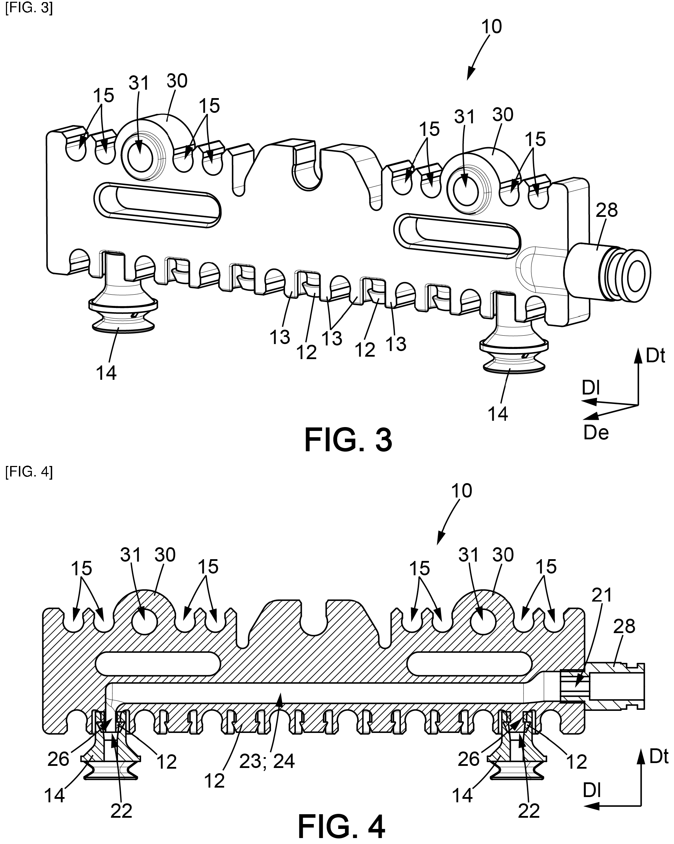

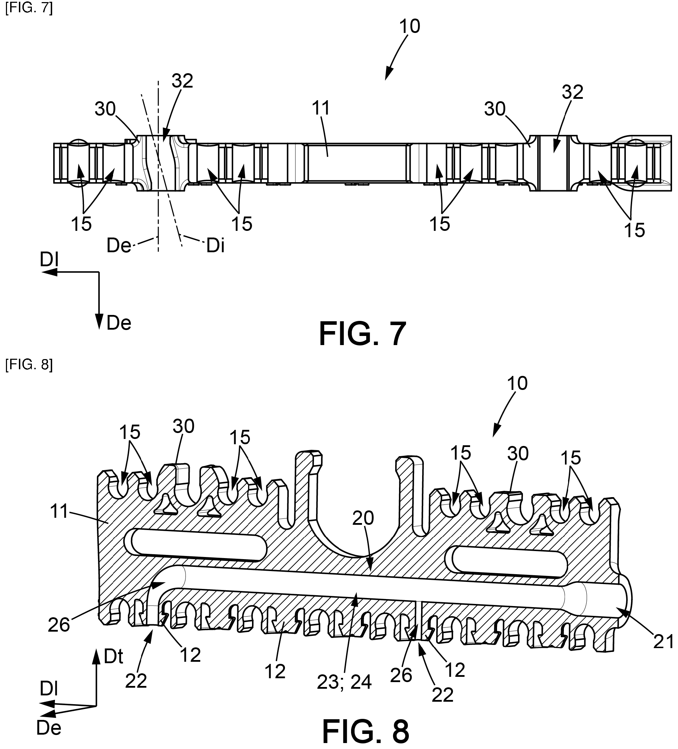

Il est tout d'abord décrit un module de préhension pour un ensemble préhenseur modulaire (décrit plus en détail plus loin), en référence aux figures 3 à 12.

Le module de préhension 10 comprend un support 11. Il peut être défini une direction longitudinale DI qui coïncide avec avec la direction de la plus grande dimension du support, une direction transversale Dt coïncidant avec la direction de la deuxième plus grande dimension du support. La direction transversale peut être perpendiculaire à la direction longitudinale. Le support peut présenter une forme sensiblement plate ayant une épaisseur réduite par rapport aux dimension longitudinale DI et transversale Dt. Il est défini une dimension d'épaisseur De perpendiculaire aux directions longitudinale DI et transversale Dt.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontal », « vertical », etc., il est fait référence, sauf précision contraire, à l'orientation des figures ou du module de préhension dans sa position normale d'utilisation en configuration de prise ou de dépose (décrites plus loin).

Le module de préhension comprend un ou plusieurs ergots 12 faisant saillie du support 11, chaque ergot 12 étant venu de matière avec le support 11 et adapté pour l'attache amovible d'une ventouse 14 respective. Chaque ergot 12 peut faire saillie du support 11 selon la direction transversale Dt. Par l'extrémité de l'ergot 12, on entend l'extrémité libre de l'ergot 12, c'est-à-dire l'extrémité opposée au support 11. Lesdits un ou plusieurs ergots 12 peuvent être répartis selon la direction longitudinale DI du module de préhension 10.

Par venu de matière, il est entendu que le support 11 et les ergots 12 forment une pièce monobloc.

Chaque ergot 12 peut présenter une forme cylindrique, conique, tronconique. Aussi chaque ergot 12 peut présenter une forme de téton. Chaque ergot 12 peut comprendre au moins l'un parmi un rebord de verrouillage, une gorge, et un bossage.

Le module de préhension 10 peut comprendre une ventouse 14 fixée de manière amovible sur chaque ergot 12 dont l'extrémité comporte une ouverture aval 22. Chaque ventouse 14 peut être attachée sur l'ergot 12 correspondant par encliquetage, notamment sur ledit au moins parmi le rebord annulaire de verrouillage (cas représenté), la gorge, et le bossage. Alternativement ou au surplus, chaque ventouse 14 peut être attachée sur l'ergot 12 par serrage, c'est-à-dire par une déformation élastique de la ventouse 14 autour de l'ergot 12 correspondant. À cet effet, chaque ventouse 14 peut comprendre un embout de fixation. Selon une variante de réalisation, chaque ventouse 14 peut être attachée sur l'ergot 12 correspondant par vissage, notamment par l'embout de fixation comprenant un taraudage. À cet effet, chaque ergot 12 peut être pourvu d'un filetage. L'ergot 12 garantit un maintien efficace et sécurisé de la ventouse 14 sur le support 11, tout en permettant une fixation aisée de la ventouse 14 sur le support 11.

Chaque ventouse 14 peut comprendre une membrane flexible, formant des soufflets, de sorte à s'adapter et être bien en contact avec les faces courbées d'un produit à saisir. La ventouse 14 est ainsi configurée pour saisir, notamment selon la direction transversale Dt, par aspiration lors d'une dépression dans le canal interne 20. Le module de préhension 10 peut être adapté à la préhension d'un objet longiligne. L'objet longiligne peut être un produit alimentaire, par exemple une saucisse (d'origine animale ou végétale).

De manière remarquable, le module de préhension comprend au moins un canal interne 20 formé dans le support 11 et au moins une partie desdits un ou plusieurs ergots 12. On comprend que le canal interne 20 est noyé dans le support 11 et au moins une partie desdits un ou plusieurs ergots 12. Le canal interne 20 débouche au niveau d'une ou plusieurs ouvertures amont 21 situées sur le support 11 et configurées chacune pour être en communication fluidique avec une conduite d'aspiration respective, et au niveau d'une ou plusieurs ouvertures aval 22 situées à l'extrémité d'un ergot 12 correspondant.

Le module de préhension 10 présente ainsi un nombre réduit de composants. La réduction du nombre de pièces dans le module de préhension 10 présente un avantage technique significatif, notamment par l'élimination des connecteurs 70 pneumatiques structurellement indépendants. En effet, les connecteurs 70 pneumatiques connus sont ici remplacés par le canal interne 20. En intégrant directement les ergots 12 sur le support 11, le module simplifie considérablement les processus d'assemblage et de désassemblage. Cette simplification réduit non seulement le temps et les efforts requis pour monter et démonter le module, mais elle diminue également le risque d'erreurs d'installation. De plus, avec moins de pièces séparées, le nettoyage du module devient plus aisé et plus efficace, ce qui est particulièrement bénéfique dans des environnements où l'hygiène est cruciale, comme dans l'industrie agroalimentaire. Cette conception optimisée contribue à améliorer l'efficacité opérationnelle et à maintenir des normes sanitaires élevées.

En outre, il est obtenu une réduction de la masse du module de préhension 10. Une masse réduite facilite un déplacement du module par un robot, permettant des mouvements plus rapides et plus précis. Cette légèreté diminue également l'inertie du système, ce qui améliore la réactivité du robot lors des changements de direction ou de vitesse. En outre, une masse totale réduite contribue à la sécurité opérationnelle, car elle réduit les forces d'impact potentielles en cas de collision ou de défaillance.

Un tel module de préhension 10 peut être obtenu par fabrication additive. Aussi, un tel module de préhension 10 peut être réalisé en un matériau plastique.

Le nombre d'ouvertures aval 22 peut être inférieur au nombre d'ergots 12. Exprimé autrement, le canal interne 20 peut ne pas être débouchant au niveau d'au moins un ergot 12 parmi lesdits un ou plusieurs ergots 12. En ce sens, l'extrémité d'au moins un ergot 12 parmi lesdits un ou plusieurs ergots 12 peut être pleine. Lesdites une ou plusieurs ouvertures aval 22 peuvent comprendre au moins deux ouvertures aval 22. Lesdites au moins deux ouvertures aval 22 peuvent être agencées symétriquement par rapport à un plan médian du support 11 perpendiculaire à la direction longitudinale DI. Alternativement, lesdites au moins deux ouvertures aval 22 peuvent être agencées asymétriquement par rapport à un plan médian du support 11 perpendiculaire à la direction longitudinale DI. En conséquence, le module de préhension 10 peut comprendre au moins deux ventouses 14.

Le module de préhension 10 peut être fabriqué sans ouverture aval 22 et au moins deux ouvertures avales 22 peuvent être ouvertes avant la première utilisation du module de préhension 10. Ainsi, la position des ouvertures aval 22 peut être adaptée à la première utilisation du model de préhension 10. Des ouvertures aval 22 supplémentaires peuvent ensuite être ajoutées au module de préhension 10 si plus d'ouvertures aval 22 sont nécessaires pour la réalisation d'une deuxième utilisation. Dans cette configuration, le module de préhension 10 peut être facilement adapté à plusieurs utilisations distinctes nécessitant des nombres et/ou des positions d'ouverture aval différents.

Dans une autre configuration, le module de préhension 10 peut être fabriqué directement avec au moins deux ouvertures aval 22.

Pour au moins l'un, voire chacun, desdits un ou plusieurs ergots 12, le module de préhension 10 peut comprendre au moins une protubérance 13 qui entoure en tout ou partie ledit ergot 12. Ladite au moins une protubérance 13 peut faire saillie du support 11 selon la direction transversale Dt. Ladite au moins une protubérance 13 peut comprendre une paire de protubérances 13 agencées, notamment longitudinalement, de part et d'autre de l'ergot 12 correspondant. Chaque protubérance 13 peut présenter une face arrondie en vis-à-vis de l'ergot 12, conformé pour correspondre à la ventouse 14. En ce sens, chaque protubérance 13 peut former une demi-coque entourant partiellement l'ergot 12 correspondant. L'espace entre l'ergot 12 et chaque protubérance 13 est apte à recevoir une ventouse 14, notamment une portion d'attache de la ventouse 14. Autrement dit, les protubérances 13, avec leur face arrondie orientée vers l'ergot 12, sont conformées pour s'adapter à la ventouse 14, formant ainsi une demi-coque qui entoure partiellement l'ergot 12. Le module de préhension 10 est ainsi conçu pour assurer une protection efficace des ergots 12, ce qui est particulièrement crucial lorsqu'ils sont percés, car ils présentent alors une épaisseur de paroi plus fine. Cette configuration protège les ergots 12 des impacts et des forces externes, préservant leur intégrité structurelle malgré leur paroi réduite. En offrant un espace entre l'ergot 12 et chaque protubérance 13 pour accueillir la ventouse 14 (notamment l'embout de fixation), le module maintient la fonctionnalité de préhension tout en renforçant la durabilité et la fiabilité des ergots 12 dans des environnements industriels exigeants.

Comme il sera vu plus loin, le canal interne 20 du module de préhension 10 peut être destiné à être mis en communication fluidique avec une source de vide par l'intermédiaire de l'une ou plusieurs conduites d'aspiration. Le module de préhension 10 peut comprendre un ou plusieurs manchons de raccordement 28. Chaque manchon de raccordement 28 peut être situé au niveau d'une ouverture amont 21 respective parmi lesdites une ou plusieurs ouvertures amont 21. Chaque manchon peut être configuré pour assurer un raccordement étanche et sécurisé entre le canal interne 20 et une conduite d'aspiration. Au moins un, voire chacun, desdits un ou plusieurs manchons peut être configuré pour une connexion avec une buse de la conduite d'aspiration. Au moins un, voire chacun, desdits un ou plusieurs manchons peut être du type raccord à connexion rapide. Au moins un, voire chacun, desdits un ou plusieurs manchons peut être venu de matière avec le support. Au moins, voire chacun, desdits un ou plusieurs manchons peut être rapporté et fixé au support.

Le canal interne 20 peut comprendre une conduite principale 23 débouchant au niveau desdites une ou plusieurs ouvertures amont 21. Le canal interne 20 peut aussi comprendre une ou plusieurs conduites secondaires 26 en communication fluidique avec la conduite principale 23 et débouchant chacune au niveau d'une ouverture aval 22 respective.

Chaque conduite secondaire 26 du canal interne 20 peut être percée en fonction des besoins spécifiques, c'est-à-dire uniquement dans les ergots 12 qui recevront effectivement une ventouse 14. Cette caractéristique confère une modularité au module de préhension 10, permettant de l'adapter facilement aux exigences variées des biens à saisir. En ne perçant que les conduites nécessaires, le module peut être configuré pour adapter la position des ventouses 14 en fonction de la taille, de la forme ou de la disposition des objets à manipuler. Cette flexibilité améliore l'efficacité du système et permet une personnalisation rapide et économique pour différentes applications industrielles. De plus, le module de préhension 10 peut être conçu comme un composant standard, utilisable dans une grande variété d'applications, ce qui simplifie et rend plus économique la production.

Au moins l'une, voire chacune, desdites une ou plusieurs conduites secondaires 26 peut s'étendre en tout ou partie selon la direction transversale Dt. Au moins l'une, voire chacune, desdites une ou plusieurs conduites secondaires 26 peut être, en tout ou partie, cylindrique de révolution selon la direction transversale Dt.

La conduite principale 23 du canal interne 20 peut comprendre au moins une branche de distribution 24 s'étendant longitudinalement le long desdits un ou plusieurs ergots 12 et par laquelle la conduite principale 23 est en communication fluidique avec lesdites une ou plusieurs conduites secondaires 26. La branche de distribution 24 assure donc la distribution du vide dans chaque conduite secondaire 26 pour l'opération de préhension.

En référence aux variantes des figures 3 à 8, lesdites une ou plusieurs ouvertures amont 21 peuvent comprendre une ouverture amont 21 unique. L'utilisation d'une seule conduite d'aspiration reliée au module de préhension 10 réduit encore davantage le nombre de pièces nécessaires. Cela diminue non seulement la complexité du module de préhension 10, mais aussi l'intrication des conduites au sein de l'ensemble préhenseur modulaire 40. En conséquence, le système devient plus facile à gérer et à entretenir. Moins de conduites signifie également une réduction des risques de fuites ou de dysfonctionnements, contribuant ainsi à une performance plus fiable et à une maintenance simplifiée.

La branche de distribution 24 de la conduite principale 23 peut déboucher directement au niveau de l'ouverture amont 21 unique. Autrement dit, l'extrémité débouchante de la branche de distribution 24 coïncide avec l'ouverture amont 21. En particulier, la branche de distribution 24 de la conduite principale 23e peut déboucher longitudinalement au niveau de l'ouverture amont 21.

Lesdites une ou plusieurs ouvertures aval 22 peuvent comprendre au moins une ouverture aval 22 située à l'extrémité de l'ergot 12 qui est le plus éloigné longitudinalement de l'ouverture amont 21 (appelé ci-après ouverture aval 22 distale). Une extrémité de fond de la branche de distribution 24, c'est-à-dire l'extrémité opposée à l'ouverture amont 21, peut être en communication fluidique avec la conduite secondaire 26 débouchant au niveau de l'ouverture distale. Cela permet d'éviter la formation d'une portion de fond sans issue dans la branche de distribution 24, et minimise le risque de rétention de résidus de liquide de nettoyage. Cela est particulièrement important pour maintenir l'hygiène, car les résidus peuvent devenir des foyers de contamination. En éliminant les zones où le liquide pourrait stagner, le module de préhension 10 garantit un nettoyage plus efficace et conforme aux normes sanitaires. La conduite secondaire 26 débouchant au niveau de l'ouverture distale peut s'étendre transversalement et être courbée de manière à être connectée à la branche de distribution 24.

Lesdites une ou plusieurs conduites secondaires 26 peuvent comprendre au moins une première conduite secondaire 26 et une deuxième conduite secondaire 26, la première conduite secondaire 26 étant située longitudinalement plus près de l'ouverture amont 21 que ne l'est la deuxième conduite secondaire 26. La première conduite secondaire 26 peut présenter une section inférieure à une section de la deuxième conduite secondaire 26. Plus particulièrement, la première conduite secondaire 26 peut présenter un diamètre intérieur inférieur à un diamètre intérieur de la deuxième conduite secondaire 26. De manière générale, dans le cas d'une pluralité de conduites secondaires 26, une section ou un diamètre intérieur de chaque conduite secondaire 26 peut être d'autant plus grand(e) que la conduite secondaire 26 est éloignée longitudinalement de l'ouverture amont 21. Cette configuration permet une aspiration homogène à travers les différentes conduites secondaires 26, en tenant compte des pertes de charge dues aux différentes longueurs d'aspiration.

La branche de distribution 24 peut présenter au moins en partie un profil longitudinal qui s'évase longitudinalement, de préférence de manière progressive, dans un sens allant de l'extrémité débouchante vers l'extrémité de fond. La branche de distribution 24, en présentant un profil longitudinal qui s'évase progressivement de l'extrémité débouchante vers l'extrémité de fond, permet réduction des pertes de charge dans la branche de distribution 24. En conséquence, l'efficacité du système d'aspiration est améliorée, garantissant que chaque ventouse 14 reçoit une aspiration optimale. Cette réduction des pertes de charge contribue à une performance plus fiable et constante du module de préhension 10. Alternativement, la branche de distribution 24 peut présenter au moins en partie un profil longitudinal droit. Autrement dit, la branche de distribution 24 peut présenter une forme cylindrique de révolution selon un axe longitudinal.

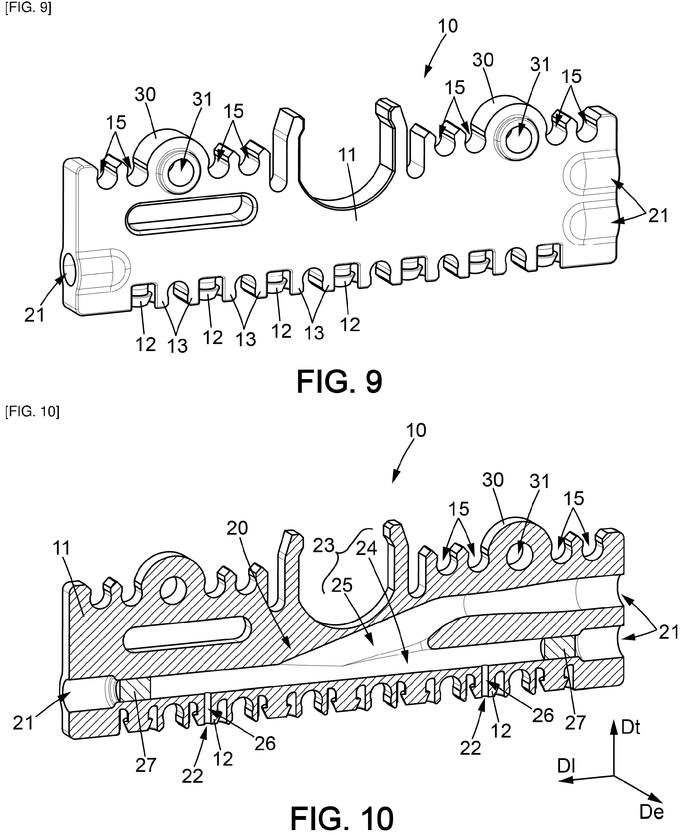

Selon une autre variante représentée aux figures 9 et 10 et dans laquelle lesdites une ou plusieurs ouvertures amont 21 comprennent aussi une ouverture amont 21 unique, la conduite principale 23 peut comprendre une branche d'aspiration 25 qui débouche longitudinalement au niveau de l'ouverture amont 21 et qui est en communication fluidique avec la branche de distribution 24. La branche de distribution 24 peut alors être borgne à chacune de ses extrémités longitudinales. Autrement dit, chaque extrémité longitudinale de la branche de distribution 24 peut être obturée, de manière définitive ou temporaire. Par exemple, chaque extrémité longitudinale de la branche de distribution 24 peut être obturée par le biais d'un bouchon 27 amovible.

En particulier, la position longitudinale de chaque bouchon 27 peut être déterminée selon la position longitudinale des ergots 12 dont l'extrémité comprend une ouverture aval 22. Cette configuration peut être conçue pour limiter la différence de perte de charge entre les différents chemins d'aspiration débouchant chacun par une ouverture aval 22 respective. En ajustant la position longitudinale des bouchons 27, le système peut équilibrer les flux d'aspiration, assurant ainsi une distribution uniforme de la pression à travers les différentes conduites. Cela garantit que chaque ventouse 14 reçoit une aspiration optimale, améliorant ainsi l'efficacité et la performance du module de préhension 10 dans ses opérations de manipulation. Par position longitudinale du bouchon 27, il est entendu la position longitudinale qui délimite la branche de distribution 24, c'est-à-dire la position longitudinale de l'extrémité longitudinale correspondante de la branche de distribution 24. Le bouchon 27 peut présenter une épaisseur selon la direction longitudinale DI.

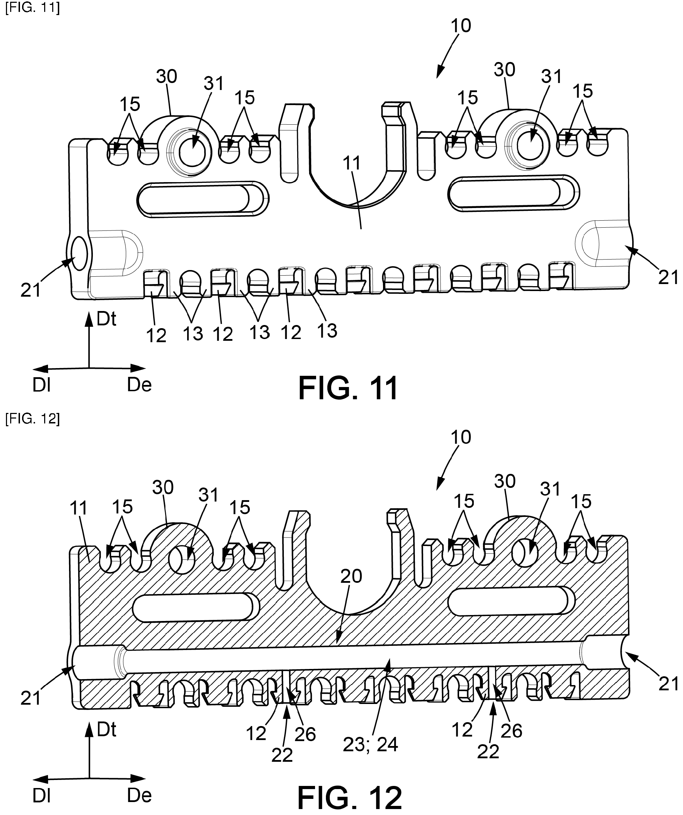

Selon une autre variante de réalisation représentée aux figures 11 et 12, lesdites une ou plusieurs ouvertures amont 21 peuvent comprendre une première ouverture amont 21 et une deuxième ouverture amont 21. La branche de distribution 24 de la conduite principale 23e peut déboucher directement longitudinalement de chaque côté au niveau de la première ouverture amont 21 et au niveau de la deuxième ouverture amont 21. En ce sens, la première ouverture amont 21 et la deuxième ouverture amont 21 peuvent être longitudinalement opposées l'une de l'autre. En particulier, la première ouverture amont 21 et la deuxième ouverture amont 21 peuvent être situées sur des faces du support 11 longitudinalement opposées l'une de l'autre. Cette configuration permet une aspiration homogène à travers les différentes conduites secondaires 26 en uniformisant les pertes de charges des conduites secondaires 26.

Le module de préhension peut comprendre un ou plusieurs organes de guidage 30 solidaire du support 11, chaque organe de guidage 30 étant configuré pour coopérer avec un rail 42 respectif afin de guider en coulissement le module de préhension 10 sur le(s) rail(s) 42. Ainsi, le support 11 peut être monté coulissant sur un ou plusieurs rails 42.

Chaque organe de guidage 30 peut être configuré pour coopérer avec le rail 42 respectif afin de guider le module en coulissement selon une direction d'épaisseur De du module de préhension 10. La direction d'épaisseur De peut être perpendiculaire à au moins l'une parmi la direction longitudinale DI et la direction transversale Dt.

Chaque organe de guidage 30 peut être venu de matière (c'est-à-dire monobloc) avec le support 11.

Au moins un, voire chacun, desdits un ou plusieurs organes de guidage 30 peut faire saillie du support 11 selon la direction transversale Dt. En particulier, lesdits un ou plusieurs ergots 12 et lesdits un ou plusieurs organes de guidage 30 peuvent faire saillie du support 11 selon des sens opposés de la direction transversale Dt. Le support 11 peut présenter un bord inférieur et un bord supérieur opposé l'un de l'autre selon la direction transversale Dt. Lesdits un ou plusieurs ergots 12 peuvent faire saillie du bord inférieur du support 11. Lesdits un ou plusieurs organes de guidage 30 peuvent faire saillie du bord supérieur du support 11. Alternativement, au moins un, voire chacun, desdits un ou plusieurs organes de guidage 30 peut être formé dans le support 11.

Lesdits un ou plusieurs organes de guidage 30 peuvent comprendre un premier organe de guidage 30 et un deuxième organe de guidage 30. Le premier organe de guidage 30 et le deuxième organe de guidage 30 peuvent être écartés longitudinalement l'un de l'autre.

Au moins l'un, voire chacun des organes de guidage 30, peut comprendre un orifice permettant le passage du rail 42, assurant ainsi un maintien et un déplacement guidé du module de préhension 10. L'orifice peut présenter une section circulaire ou oblongue. Ainsi, l'organe de guidage 30 peut former une extension tubulaire 31, formant ainsi un manchon, selon la direction d'épaisseur De destiné à recevoir le rail 42 correspondant. L'organe de guidage 30 peut comprendre une face interne qui délimite l'extension tubulaire 31, et au niveau de laquelle l'organe de guidage 30 peut être réalisé en un matériau au faible coefficient de friction, afin de réduire l'usure et faciliter le mouvement sur le rail 42 correspondant.

Comme visible aux figures 3 et 4 par exemple, au moins un, voire chacun, desdits un ou plusieurs organes de guidage 30 peut comprendre un anneau de guidage (ou anneau fermé de guidage) permettant un engagement complet autour du rail 42. Ce type d'organe de guidage 30 assure un maintien permanent sur le rail 42, limitant tout dégagement accidentel.

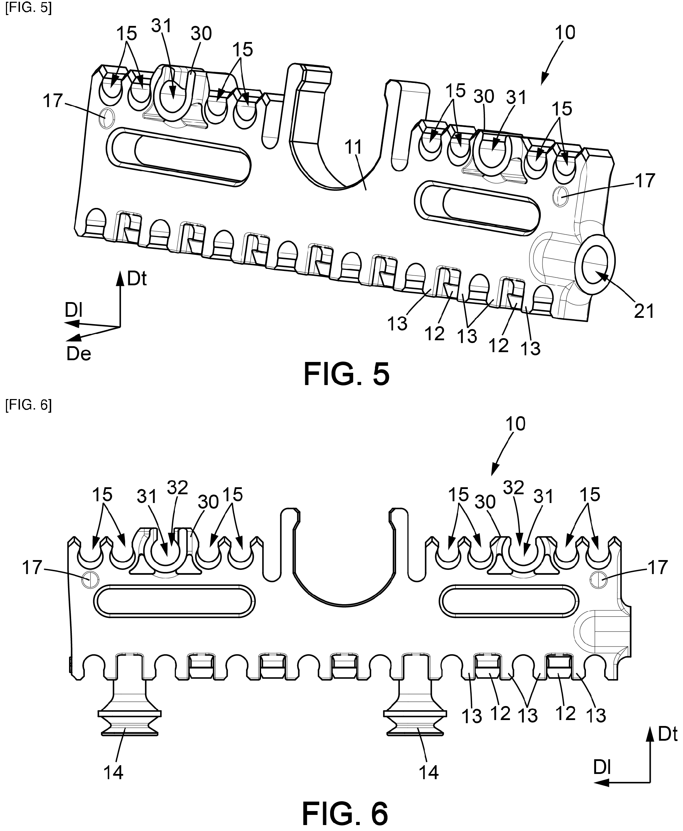

Comme visible aux figures 5 à 8, au moins un, voire chacun, desdits un ou plusieurs organes de guidage 30 peut comprendre une fourche de guidage (ou anneau ouvert de guidage) qui présente une ouverture en forme de fente 32 qui permet l'insertion ou le retrait du rail 42 dans l'extension tubulaire 31 sans avoir à le faire coulisser jusqu'à l'extrémité du rail 42 et donc sans avoir à enlever d'autres modules de préhension 10. La fente 32 d'au moins un, voire chacun, desdits un ou plusieurs organes de guidage 30 peut s'étendre selon la direction d'épaisseur De pour faciliter l'insertion ou le retrait du rail 42. Au surplus, la fente 32 d'au moins un, voire chacun, desdits un ou plusieurs organes de guidage 30 peut s'étendre selon une direction inclinée Di formant un angle par rapport à la direction d'épaisseur De, en particulier dans un plan défini par la direction d'épaisseur De et la direction longitudinale DI. Le désalignement entre l'extension tubulaire 31 selon la direction d'épaisseur De et la fente 32 selon la direction inclinée Di permet une insertion avec clipsage du rail 42 dans la fourche de guidage, ce qui assure un meilleur maintien du rail 42 dans la fourche de guidage.

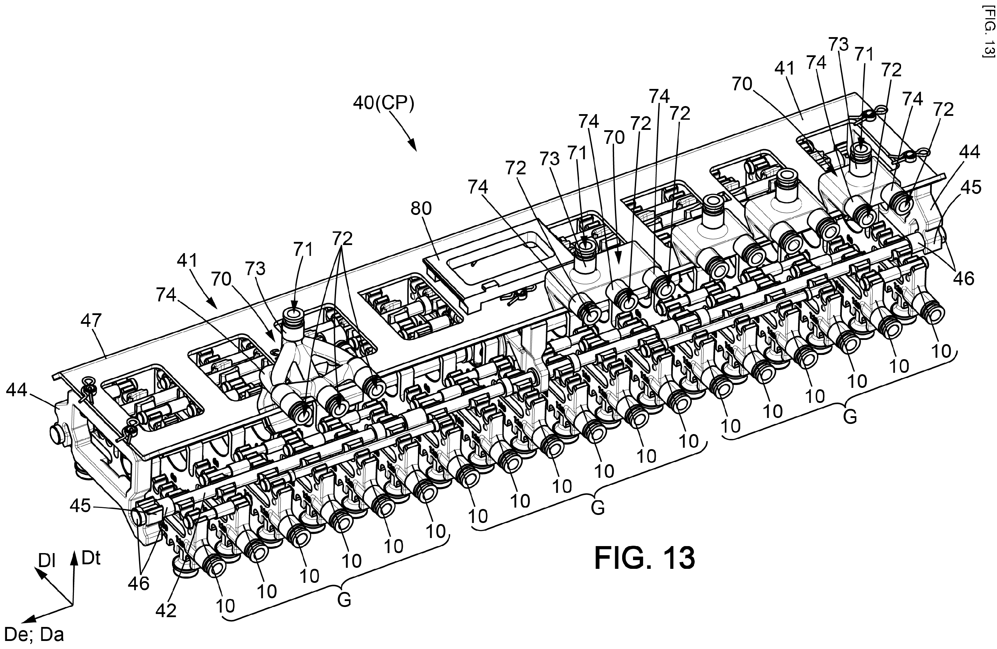

Il est maintenant décrit un ensemble préhenseur modulaire en référence aux figures 13 à 20. L'ensemble préhenseur modulaire 40 peut comprendre une armature 41 qui comporte un ou plusieurs rails 42 s'étendant selon une direction axiale Da. Lesdits un ou plusieurs rails peuvent être parallèles entre eux. En l'occurrence, l'armature 41 comprend deux rails 42 dans l'exemple illustré.

L'armature 41 peut comprendre au moins une traverse 44 à laquelle est reliée au moins une portion d'extrémité de chaque rail 42. La portion d'extrémité du rail 42 peut être reliée par clipsage (c'est-à-dire par emboitement élastique) à la traverse 44. À cet effet, la traverse 44 peut comprendre des reliefs 45 élastiquement déformables pour le clipsage du rail 42. En outre, la portion d'extrémité du rail 42 peut comprendre une paire d'épaulements 46 entre lesquels est fixé, de préférence avec un jeu réduit et voir sans jeu, la traverse 44, notamment par l'intermédiaire des reliefs 45. On assure ainsi un blocage d'un déplacement relatif selon la direction axiale Da entre le rail 42 et la traverse 44.

Comme représenté, l'armature 41 peut comprendre deux traverses écartées l'une de l'autre selon la direction axiale Da. Ainsi, pour chaque rail 42, une première portion d'extrémité peut être fixée à l'une des traverses 44 et une seconde portion d'extrémité opposée peut être fixée à l'autre des traverses 44.

L'armature 41 peut encore comprendre un châssis 47. Chaque traverse 44 peut être fixée au châssis 47, notamment selon au moins l'une des techniques de fixation : vissage, rivetage, soudage, collage, emboitement, emboitement élastique (c'est-à-dire le clipsage), brasage, sertissage, fixation par goupille.

L'ensemble préhenseur modulaire 40 peut aussi comprendre un ou plusieurs modules de préhension 10 tel que décrit ci-avant.

Lesdites un ou plusieurs modules de préhension 10 peuvent être agencés parallèles les uns par rapport aux autres. En ce sens, lesdites un ou plusieurs modules de préhension 10 peuvent être agencés de manière à ce que leurs directions longitudinales DI soient coïncidentes. La direction axiale Da de l'ensemble préhenseur modulaire 40 peut coïncider avec la direction d'épaisseur De desdits un ou plusieurs modules de préhension 10.

Au moins un desdits un ou plusieurs modules de préhension 10 peut être monté coulissant sur chacun desdits un ou plusieurs rails 42. L'ensemble préhenseur modulaire 40 peut comprendre un ou plusieurs groupes G de modules de préhension 10. Au sein de chaque groupe, au moins un module de préhension 10 (en l'occurrence un ou deux) peut être fixe sur lesdits un ou plusieurs rails 42, les autres étant montés coulissant sur lesdits un ou plusieurs rails 42.

Pour le montage fixe d'un module de préhension 10 sur un rail 42, le rail 42 peut comprendre une paire d'épaulements 43 entre lesquels est intercalé le module de préhension 10 selon la direction axiale Da (notamment avec jeu réduit ou sans jeu). Ainsi, on assure un blocage en coulissement selon la direction axiale Da du module de préhension 10 sur le rail 42. En utilisant une paire d'épaulements sur le rail pour intercaler le module de préhension, le système simplifie le processus d'installation et de fixation. Cette méthode réduit la complexité du montage en éliminant la nécessité de composants supplémentaires tels que des goupilles, ce qui diminue le risque de défaillance mécanique et facilite la maintenance.

L'ensemble préhenseur modulaire 40 peut comprendre au moins un actionneur 50 configuré pour entrainer lesdits un ou plusieurs modules de préhension 10 en translation le long desdits un ou plusieurs rails 42. Ledit au moins actionneur 50 peut être être un vérin axial. (par exemple pneumatique, électrique ou hydraulique). Le vérin peut comprendre un piston 51 et une tige rétractable 52 reliée fixement à au moins un desdits un ou plusieurs modules de préhension 10.

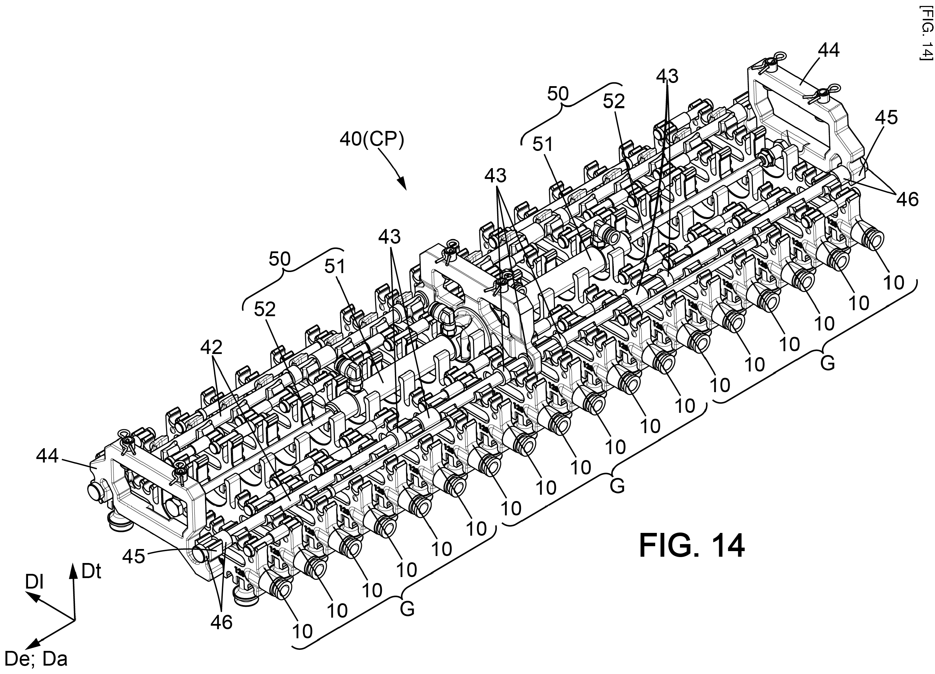

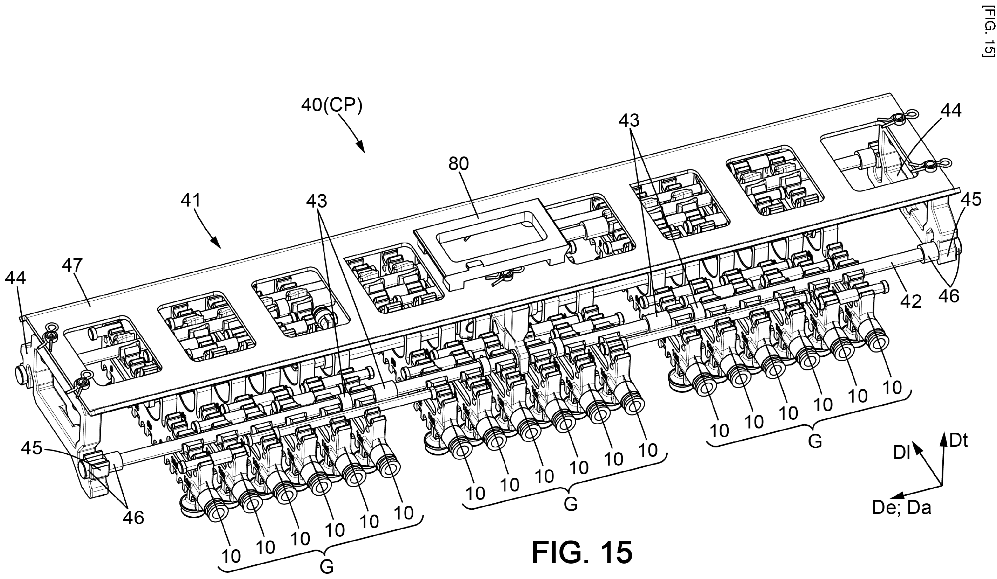

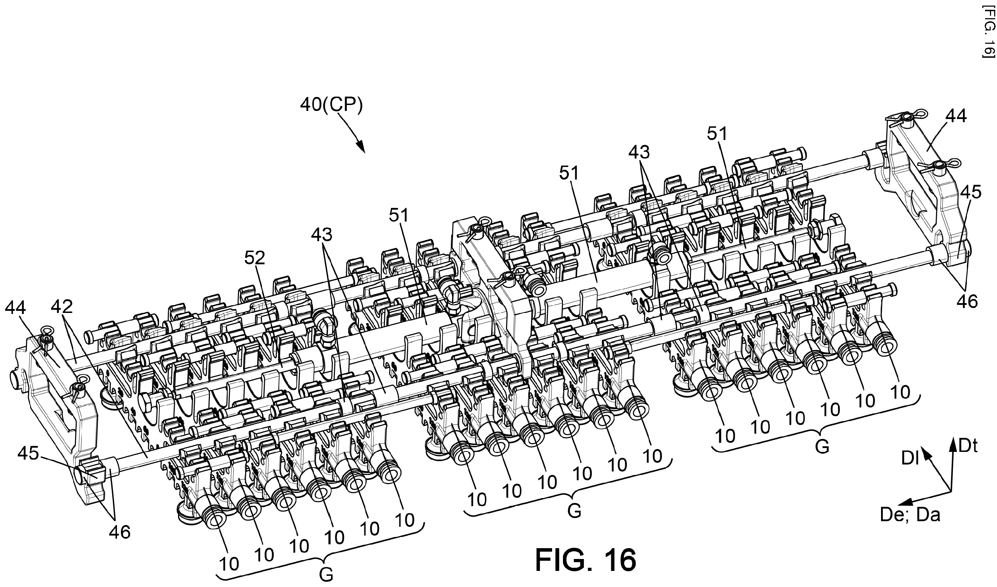

Les modules de préhension 10 peuvent coulisser sur lesdits un ou plusieurs rails 42 entre une configuration de prise CP (figures 13 et 14) et une configuration de dépose CD (figures 15 et 16).

Dans la configuration de prise CP, les modules de préhension 10 sont répartis de manière régulière (c'est-à-dire uniformément) selon la direction axiale Da. Autrement dit, les modules de préhension 10 de chaque paire de modules de préhension 10 consécutifs sont écartés axialement l'un de l'autre selon un premier espacement identique.

Dans la configuration de dépose CD, les modules de préhension 10 sont organisés (c'est-à-dire distribués) par groupes selon la direction axiale Da. Les modules de préhension 10 d'un même groupe G peuvent être répartis de manière régulière selon la direction axiale Da. Les modules de préhension 10 de chaque paire de modules de préhension 10 consécutifs d'un même groupe G peuvent être écartés axialement l'un de l'autre selon un deuxième espacement. Les groupes G de modules de préhension 10 peuvent être écartés longitudinalement les uns des autres selon un troisième espacement. Exprimé autrement, un premier module de préhension 10 situé en bout d'un premier groupe G peut être écarté axialement d'un deuxième module de préhension 10 axialement consécutif (consécutif du premier module de préhension 10) et situé en bout d'un deuxième groupe G par le troisième espacement. Le troisième espacement peut être supérieur au deuxième espacement.

Les modules de préhension 10 peuvent coulisser conjointement entre la configuration de prise CP et la configuration de dépose CD.

Lorsque les modules de préhension 10 sont dans la configuration de prise CP, l'ensemble préhenseur modulaire 40 est adapté à la préhension d'un ou plusieurs objets longilignes disposés sur une surface de support 11. Chaque objet longiligne peut être saisi par un module de préhension 10 associé avec mise en contact desdites une ou plusieurs ventouses 14 sur l'objet longiligne et mise sous dépression (voire sous vide) du canal interne 20 par la source de vide. La surface de support 11 peut être configurée pour acheminer les produits longilignes. Par exemple, la surface de support 11 peut être une bande convoyeuse, présentant en relief des logements, parallèles, recevant individuellement des produits longilignes.

Lorsque les modules de préhension 10 sont dans la configuration de dépose CD, l'ensemble préhenseur modulaire 40 est adapté à la dépose des objets longilignes dans un ou plusieurs emballages par arrêt de la dépression (voire mise à l'air libre) dans le canal interne 20.

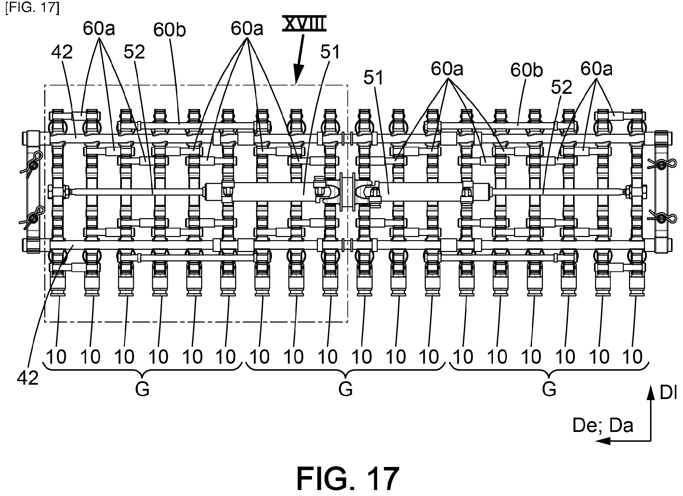

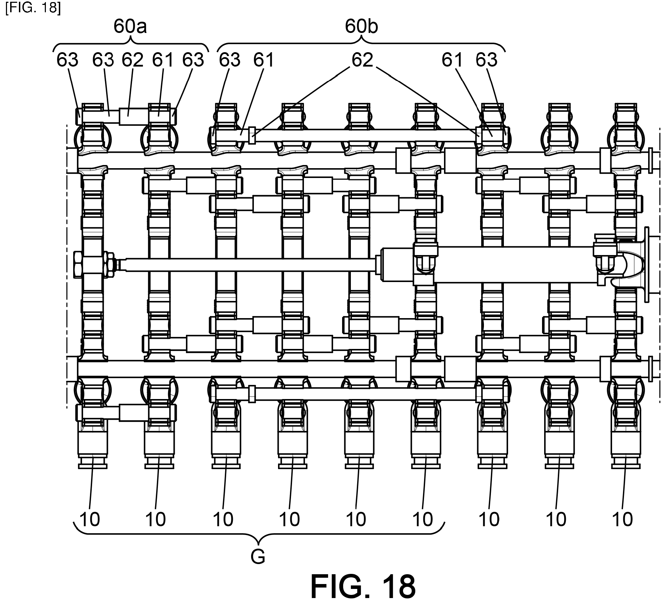

L'ensemble préhenseur modulaire 40 peut comprendre une pluralité de tiges de liaison 60a; 60b configurée chacune pour coupler deux modules de préhension 10 parmi lesdits un ou plusieurs modules de préhension 10. Les tiges de liaison 60a; 60b sont plus particulièrement visibles aux figures 17 et 18. Les tiges de liaison 60a; 60b peuvent s'engager par deux extrémités dans deux logements 15 respectifs des modules de préhension 10 par emboitement élastique. Les logements 15 de chaque module de préhension 10 peuvent être formés dans le bord supérieur du module de préhension 10, notamment alignés selon la direction longitudinale, notamment encore agencés symétriquement par rapport à un plan médian du module de préhension 10 perpendiculaire à leur direction longitudinale DI. Dans les exemples illustrés, chaque module de préhension 10 comprend huit logements 15, notamment quatre logements 15 de chaque côté du plan médian du module de préhension 10.

Les tiges de liaison 60a; 60b peuvent être des éléments longilignes selon la direction axiale Da. Les tiges de liaison 60a; 60b peuvent comprendre au moins deux portions fines 61 de rayon inférieur, sur chacune desquelles un module de préhension 10 respectif peut se fixer, voire coulisser, par le logement 15 correspondant. Les tiges de liaison 60a; 60b peuvent comprendre au moins une portion épaisse 62 de rayon supérieur, sur laquelle les modules de préhension 10 ne peuvent pas coulisser. La portion épaisse 62 peut séparer axialement les deux portions fines 61. Les extrémités des tiges de liaison 60a; 60b sont pourvues chacune d'une butée 63. L'un des modules de préhension 10 peut être monté sans jeu axial sur l'une des portions fines 61 de la tige de liaison 60a; 60b (entre la portion épaisse 62 et l'une des butées 63) et l'autre des modules de préhension 10 peut être monté coulissant (c'est-à-dire avec jeu) sur l'autre portion fine 61 de la tige de liaison 60a; 60b (entre la portion épaisse 62 et l'autre des butées 63). Ce montage coulissant permet de régler l'espacement entre les modules de préhension 10 couplés, notamment entre la configuration de prise CP et la configuration de dépose CD. À cet effet, l'une des portions fines 61 peut être plus longue que l'autre. La longueur de la portion fine 61 sur laquelle un module de préhension 10 est monté coulissant (entre la butée 63 et la portion épaisse 62) détermine la course de déplacement entre les deux modules de préhension 10 reliés deux à deux par la tige de liaison 60a; 60b.

Les tiges de liaison 60a; 60b peuvent comprendre des tiges de liaisons courtes 60a. Les tiges de liaisons courtes 60a maintiennent les modules de préhension 10 reliés les uns des autres au sein d'un même groupe G. En ce sens, chaque tige de liaison courte 60a assure une liaison entre deux modules de préhension 10 successifs d'un même groupe G. Un ou plusieurs, voire l'ensemble, des modules de préhension 10 de chaque groupe G de modules de préhension 10 peuvent être reliés deux à deux par des tiges de liaison 60a; 60b amovible.

Chaque actionneur 50 peut être relié à un seul module de préhension 10 parmi lesdits un ou plusieurs modules de préhension 10. Plus spécifiquement, chaque actionneur 50 peut être relié à un seul module de préhension 10 parmi lesdits un ou plusieurs modules de préhension 10 au sein d'un même groupe G. Le couplage deux à deux des modules de liaison de chaque groupe G combiné avec le montage coulissant sur les tiges de liaisons 60a; 60b permet un ajustement de l'espacement entre les modules de préhension 10 au sein d'un même groupe G les uns après les autres (une fois qu'un module de préhension 10 a complété sa translation, il entraîne le module suivant en translation, et ainsi de suite) par l'activation d'un seul actionneur 50.

Les tiges de liaison 60a; 60b peuvent comprendre des tiges de liaison longue 60b. Chaque tige de liaison longue 60b est positionnée entre deux groupes G de modules de préhension 10. Un module de préhension 10 de chacun des deux groupes G de module de préhension 10 est fixé à la tige de liaison longue 60b, en emboitement élastique, par son logement 15. Les tiges de liaison longues 60b assurent une liaison coulissante entre deux modules de préhension 10 de deux groupes G successifs, suivant les rails 42, autorisant un rapprochement des deux modules de préhension 10, dans la position de prise, et un écartement entre les deux groups selon une course limitée et déterminée par la tige de liaison longue 60b, fixant l'espacement des deux groupes G, dans la position de dépose. En outre, les tiges de liaison longue 60b permettent un ajustement de l'espacement entre les modules de préhension 10 au sein de deux groupes G, les uns après les autres, et par l'activation d'un seul actionneur 50.

Un module de préhension 10 peut donc être relié à un, voire deux, module de préhension 10 au sein du même groupe G par des tiges de liaisons courtes 60a respectives et éventuellement à un module de préhension 10 d'un autre groupe G par une tige de liaison longue 60b. Le couplage entre deux modules de préhension 10 peut être réalisé par une paire de tiges de liaison 60a; 60b (courtes ou longues), notamment agencées symétriquement par rapport à un plan médian des modules de préhension 10 et perpendiculaire à leur direction longitudinale DI.

Selon l'exemple de réalisation, il peut être prévu successivement un premier, un deuxième et troisième groupes G de modules de préhension 10, comprenant par exemple chacun six modules de préhension 10. Il peut être prévu un premier actionneur 50 pour coulisser un module de préhension 10 du premier groupe G et un deuxième actionneur 50 pour coulisser un module de préhension 10 du troisième groupe G. Les modules de préhension 10 du premier groupe G peuvent être reliés deux à deux par des tiges de liaisons courtes 60a. De même, les modules de préhension 10 du premier groupe G peuvent être reliés deux à deux par des tiges de liaisons courtes 60a. Ainsi, l'activation du premier actionneur 50 et du deuxième actionneur 50 (en l'occurrence la translation de la tige rétractable 52 correspondante) permet la transition respective des modules de préhension 10 du premier groupe G et du deuxième groupe G entre la configuration de prise CP et la configuration de dépose CD. Le deuxième groupe G de modules de préhension 10 peut comprendre un premier sous-groupe G et un deuxième sous-groupe G de module de préhension 10 pour chacun desquels les modules de préhension 10 sont reliés deux à deux par des tiges de liaisons courtes 60a. En d'autres termes, les modules de préhension 10 du premier sous-groupe G ne sont pas reliés aux modules de préhension 10 du deuxième sous-groupe G. Il peut être prévu une première tige de liaison longue 60b reliant un module de préhension 10 du premier groupe G à un module de préhension 10 du premier sous-groupe G du deuxième groupe G afin que l'activation du premier actionneur 50 permette la transition des modules du premier sous-groupe G entre la configuration de prise CP et la configuration de dépose CD. De manière similaire, il peut être prévu une deuxième tige de liaison longue 60b reliant un module de préhension 10 du troisième groupe G à un module de préhension 10 du deuxième sous-groupe G du deuxième groupe G afin que l'activation du deuxième actionneur 50 permette la transition des modules du deuxième sous-groupe G entre la configuration de prise CP et la configuration de dépose CD.

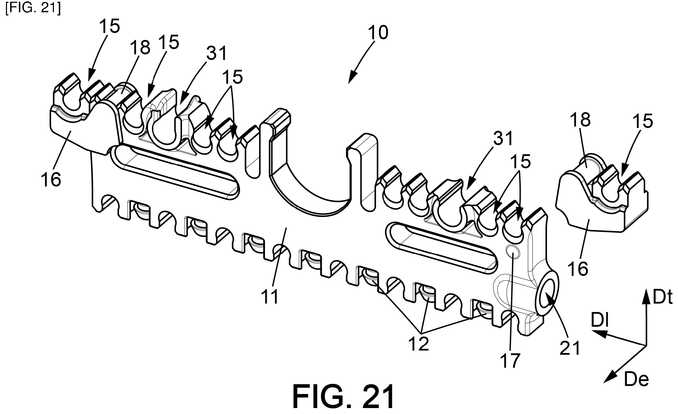

Au moins deux desdits un ou plusieurs modules de préhension 10 peut comprendre au moins un bloc d'extension 16 rapporté de manière amovible sur le support 11 et formant un logement 15 additionnel de manière déportée longitudinalement par rapport au support 11. Le bloc d'extension peut être rapporté selon la direction longitudinale du module de préhension 10, notamment au niveau d'une extrémité longitudinale du support 11. Un tel bloc d'extension 16 est visible à la figure 21, dans laquelle un module de préhension 10 comprend un bloc d'extension 16 rapporté au niveau de chaque extrémité longitudinale du support 11. Ce logement 15 additionnel permet un couplage desdits deux modules de préhension 10 par une tige de liaison 60a; 60b agencée manière longitudinalement déportée par rapport au support 11 des modules de préhension 10. Cela permet d'augmenter le nombre de groupes G de modules de préhension 10 par exemple quatre, cinq ou plus sans augmenter le nombre d'actionneurs 50. Le bloc d'extension 16 peut être fixé au support 11 du module d'extension par emboitement élastique, clipsage. À cet effet, le support 11 du module de préhension 10 peut comprendre un relief de clipsage tel qu'un bossage 17. De préférence, le support 11 du module de préhension 10 peut comprendre un relief de clipsage de chaque côté selon la direction longitudinale DI afin de monter un bloc d'extension longitudinalement de chaque côté.. Par ailleurs, également destiné au montage du bloc d'extension 16 sur le module de préhension 10, le bloc d'extension 16 peut comprendre une tige d'accrochage 18 destinée à être insérée (de préférence par emboitement élastique) dans l'un des logements 15 formés dans le support 11 du module de préhension 10. En l'occurrence, la tige d'accrochage 18 peut être insérée dans le logement 15 d'extrémité formé dans le support 11 du module de préhension.

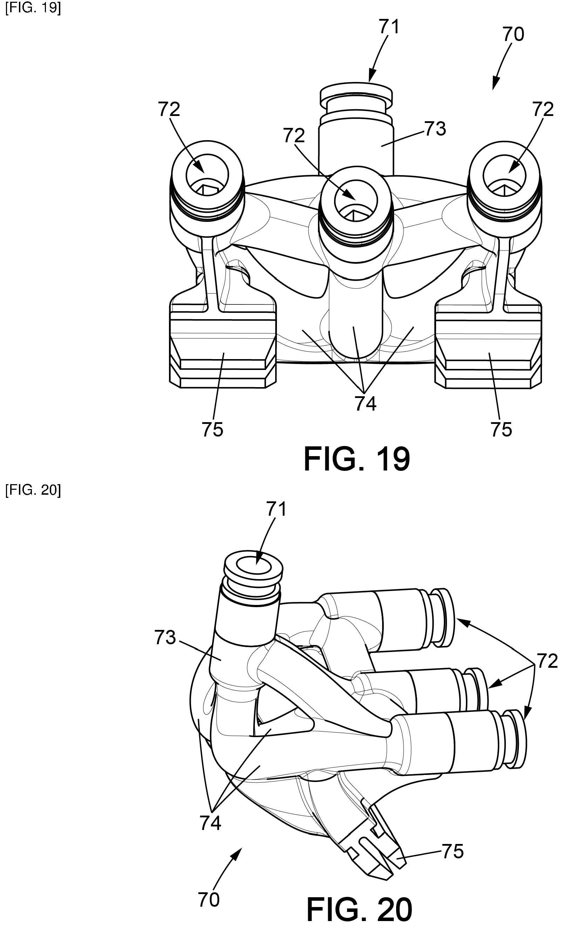

L'ensemble préhenseur modulaire 40 peut comprendre un ou plusieurs connecteurs 70. Un exemple de connecteur 70 est plus particulièrement visible aux figures 19 et 20. Chaque connecteur peut comporter une entrée 71 en communication fluidique avec une source de vide et une pluralité de sorties 72. Chaque sortie 72 de chaque connecteur 70 peut être en communication fluidique par une conduite d'aspiration avec une ouverture amont 21 associée parmi lesdites une ou plusieurs ouvertures amont 21 d'un module de préhension 10 associé parmi lesdits un ou plusieurs modules de préhension 10.

On comprend qu'une pluralité parmi lesdits un ou plusieurs modules de préhension 10 peut être pneumatiquement connectés au même connecteur 70, par ses multiples sorties 72. Il n'est pas exclu que deux ouvertures amont 21 d'un même module de préhension 10 soient respectivement connectées pneumatiquement à deux connecteurs 70 distincts parmi lesdits un ou plusieurs connecteurs 70.

Il peut être prévu des connecteurs 70 ayant des nombres de sorties 72 différents les uns des autres. Au moins un, voire chacun, desdits un ou plusieurs connecteurs 70 peut comprendre deux sorties 72. Au moins un, voire chacun, desdits un ou plusieurs connecteurs 70 peut comprendre trois sorties 72. Au moins un, voire chacun, desdits un ou plusieurs connecteurs 70 peut comprendre quatre sorties 72 ou plus.

Chaque connecteur 70 peut être fixé à l'armature 41 par au moins l'une des techniques de fixation suivante : rivetage, boulonnage, collage, soudure, clipsage.

L'entrée 71 de chaque connecteur 70 peut être en communciation fluidique avec la source de vide par le biais d'une conduite d'aspiration. Chaque conduite d'aspiration (c'est-à-dire entre source de vide et connecteur 70, et entre connecteur 70 et module de préhension 10) peut être flexible.

Chaque connecteur 70 peut être conformé pour assurer un chemin fluidique identique entre la source de vide et chaque ouverture amont 21 associée à l'une desdites une ou plusieurs sorties 72 du connecteur 70.

Chaque connecteur 70 peut comprendre un corps creux qui comprend un collecteur 73 formant l'entrée 71 et une pluralité de bras 74 formant chacune une sortie 72. Chaque bras 74 peut s'étendre depuis le collecteur 73. Chaque bras 74 peut présenter une longueur identique. Il est entendu ici la longueur réelle mesurée le long de la trajectoire suivie par le bras 74, en tenant compte de ses courbes. Au moins un, voire chacun, des bras 74 peut présenter une forme courbe ou coudée. Alternativement ou au surplus, au moins un, voire chacun, des bras 74 peut présenter une forme rectiligne.

L'ensemble préhenseur modulaire 40 peut comprendre une interface 80 adaptée pour être couplée à un bras robotisé. L'interface peut être montée solidairement sur le châssis 47. Le bras robotisé peut être un bras polyarticulé, notamment définissant au moins six axes de rotation et qui est adapté pour déplacer et/ou orienter l'ensemble préhenseur modulaire 40 suivant six degrés de liberté. Ainsi, l'ensemble préhenseur modulaire 40 peut être déplacé entre la prise d'objets longilignes sur la surface de support 11 et la dépose d'objets longilignes dans un ou plusieurs emballages. Le bras robotisé peut être équipé de dispositifs de reconnaissance de formes, de dimensions, etc, tels que des caméras pour optimiser le déplacement et la cadence de production.

La source de vide peut être une pompe à vide telle qu'une pompe à turbine ou une pompe à palette, ou un Venturi. La source de vide est externe au dispositif de préhenseur, par exemple positionnée sur le bras robotisé.

L'invention présente donc plusieurs avantages techniques notables qui améliorent son efficacité et sa praticité dans des environnements industriels exigeants.

Tout d'abord, l'aspect hygiénique du module de préhension est un atout majeur. Les matériaux utilisés sont compatibles avec les normes sanitaires, et la conception évite les surfaces de rétention, ce qui réduit le risque de contamination. Les pièces sont conçues pour permettre un écoulement optimal de l'eau lors du nettoyage, et l'absence de visserie simplifie l'entretien tout en maintenant des standards d'hygiène élevés.

Un autre avantage significatif est la possibilité de démontage sans outil, grâce à un système de clipsage. Ce mécanisme permet de remplacer rapidement un module ou un axe, minimisant ainsi les temps d'arrêt et facilitant la maintenance. Cette caractéristique est particulièrement bénéfique dans des environnements de production où la rapidité et l'efficacité des interventions sont cruciales.

Enfin, l'invention assure une aspiration similaire entre les ventouses, grâce à la forme optimisée du conduit et aux diamètres de perçage des supports de ventouses. Cette uniformité dans l'aspiration garantit une performance constante et fiable, améliorant la précision et l'efficacité des opérations de préhension. Ces avantages combinés font de l'invention une solution robuste et adaptable pour diverses applications industrielles.

## Revendications

1. Module de préhension (10) pour un ensemble préhenseur modulaire (40), le module de préhension (10) comprenant :
- un support (11),
- plusieurs ergots (12) faisant saillie du support (11), chaque ergot (12) étant venu de matière avec le support (11) et adapté pour l'attache amovible d'une ventouse (14) respective,
- au moins un canal interne (20) formé dans le support (11) et au moins une partie desdits un ou plusieurs ergots (12), le canal interne (20) débouchant :
∘ au niveau d'une ou plusieurs ouvertures amont (21) situées sur le support (11) et configurées chacune pour être en communication fluidique avec une conduite d'aspiration respective, et
∘ au niveau de plusieurs ouvertures aval (22) situées à l'extrémité d'un ergot (12) correspondant.

2. Module de préhension (10) selon la revendication précédente, dans lequel le canal interne (20) comprend :
- une conduite principale (23) débouchant au niveau desdites plusieurs ouvertures amont (21), et
- plusieurs conduites secondaires (26) en communication fluidique avec la conduite principale (23) et débouchant chacune au niveau d'une ouverture aval (22) respective.

3. Module de préhension (10) selon la revendication précédente, dans lequel lesdits plusieurs ergots (12) sont répartis selon une direction longitudinale (DI) du module de préhension (10), la conduite principale (23) du canal interne (20) comprenant au moins une branche de distribution (24) s'étendant longitudinalement le long desdits plusieurs ergots (12) et par laquelle la conduite principale (23) est en communication fluidique avec lesdites plusieurs conduites secondaires (26).

4. Module de préhension (10) selon l'une quelconque des revendications précédentes, dans lequel lesdites une ou plusieurs ouvertures amont (21) comprennent une ouverture amont (21) unique.

5. Module de préhension (10) selon l'une quelconque des revendications précédentes, lequel comprenant un ou plusieurs organes de guidage (30) solidaire du support (11), chaque organe de guidage (30) étant configuré pour coopérer avec au moins un rail (42) respectif afin de guider en coulissement le module de préhension (10) sur le rail (42).

6. Module de préhension (10) selon l'une des revendications précédentes, dans lequel le support (11) comprend un nombre d'ouverture aval (22) inférieur au nombre d'ergots (12).

7. Module de préhension selon la revendication précédente, dans lequel au moins un, voire chacun, desdits un ou plusieurs organes de guidage (30) comprend une fourche de guidage qui présente une ouverture en forme de fente (32) qui permet l'insertion ou le retrait du rail (42) dans une extension tubulaire (31) formée par la fourche de guidage, la fourche de guidage étant adaptée pour un maintien du rail dans l'extension tubulaire (31) par effet de clipsage.

8. Ensemble préhenseur modulaire (40) comprenant une armature (41) qui comporte un ou plusieurs rails (42) s'étendant selon une direction axiale (Da) et un ou plusieurs modules de préhension (10) selon l'une quelconque des revendications précédentes, chaque module de préhension (10) étant monté coulissant sur lesdits un ou plusieurs rails (42).

9. Ensemble préhenseur modulaire (40) selon la revendication précédente, dans lequel les modules de préhension (10) sont couplés deux à deux de sorte à coulisser conjointement sur lesdits un ou plusieurs rails (42) entre une configuration de prise (CP) et une configuration de dépose (CD).

10. Ensemble préhenseur modulaire (40) selon la revendication 8 ou 9, lequel comprenant un ou plusieurs connecteurs (70) qui comportent chacun une entrée (71) en communication fluidique avec une source de vide et une pluralité de sorties (72), et dans lequel chaque sortie (72) de chaque connecteur (70) est en communication fluidique par une conduite d'aspiration avec une ouverture amont (21) associée parmi lesdites une ou plusieurs ouvertures amont (21) d'un module de préhension (10) associé parmi lesdits un ou plusieurs modules de préhension (10).

11. Ensemble préhenseur modulaire (40) selon la revendication précédente, dans lequel chaque connecteur (70) est conformé pour assurer un chemin fluidique identique entre la source de vide et chaque ouverture amont (21) associée à l'une desdites une ou plusieurs sorties (72) du connecteur (70).

12. Procédé de fabrication d'un module de préhension (10) selon l'une des revendications 1 à 7, ou appartenant à un ensemble selon l'une des revendications 8 à 11 dans lequel le module de préhension (10) est obtenu par fabrication additive.
